# EUROPÄISCHE PATENTSCHRIFT

(11) **EP 1 654 452 B1**
(45) Veröffentlichungstag und Bekanntmachung des Hinweises auf die Patenterteilung: **06.08.2008**
(21) Anmeldenummer: 04762562.9
(22) Anmeldetag: 30.07.2004
(51) Int. Cl.: F02M 25/00, F02M 37/00, F02D 19/12, F01N 3/023

(54) **VERFAHREN UND VORRICHTUNG ZUR ZUFÜHRUNG EINES KRAFTSTOFFADDITIVS**
METHOD AND DEVICE FOR INTRODUCTION OF A FUEL ADDITIVE
PROCEDE ET DISPOSITIF POUR ACHEMINER UN ADDITIF POUR CARBURANT

(30) Priorität: 04.08.2003 DE 10336296
(43) Veröffentlichungstag der Anmeldung: 10.05.2006
(73) Patentinhaber: ROBERT BOSCH GMBH, 70442 Stuttgart (DE)
(72) Erfinder: WIRTH, Ralf, 71229 Leonberg (DE); CHRISTL, Werner, 71696 Moeglingen (DE); BECKER, Carsten, 71394 Kernen I.R. (DE); LUEDERS, Hartmut, 71720 Oberstenfeld (DE)
(86) Internationale Anmeldenummer: PCT/DE2004/001717
(87) Internationale Veröffentlichungsnummer: WO 2005/014994

(56) Entgegenhaltungen:
- EP-A- 0 269 228
- DE-A- 10 110 806
- GB-A- 2 390 643
- US-A- 4 620 568
- US-A1- 2003 136 355

## Beschreibung

### Stand der Technik

Die Erfindung betrifft ein Kraftstoffversorgungssystem für einen Verbrennungsmotor nach dem Oberbegriff des Anspruchs 1 sowie ein Verfahren zur Zufuhr eines mit einem Kraftstoffadditiv versehenen Kraftstoffes zu einer Kraftstoffzumesseinrichtung eines Verbrennungsmotors nach dem Oberbegriff des Anspruchs 4.

Ein solches Kraftstoffzumesssystem und ein solches Verfahren ist jeweils aus der DE 101 10 806 A1 bekannt.

Eine Zugabe von Additiven zum Kraftstoff eines Verbrennungsmotors erfolgt in der Regel mit dem Ziel, das Betriebsverhalten des Verbrennungsmotors zu verbessern oder, bei Viertakt-Verbrennungsmotoren, um die mechanische Beanspruchung der Einlassventile und Auslassventile zu verringern. Um das Betriebsverhalten des Verbrennungsmotors zu verbessern, kann beispielsweise ein Additiv zugemischt werden, das die Klopffestigkeit des Kraftstoffs erhöht. Alternativ oder ergänzend kann das Betriebsverhalten eines Verbrennungsmotors auch dahingehend verbessert werden, dass die Rohemissionen des Verbrennungsmotors oder die hinter einem Abgasnachbehandlungssystem noch vorhandenen Schadstoffemissionen verringert werden. Ein Beispiel für einen solchen Anwendungsfall sind Additive für Dieselkraftstoff, die eine Regeneration eines Partikelfilters im Abgas des Verbrennungsmotors unterstützen.

Partikelfilter zur Verwendung in motorischen Abgasen sind üblicherweise als Kanalstrukturen mit porösen Wänden aufgebaut, bei denen die Enden parallel angeordneter Kanäle wechselseitig verschlossen sind. Um den Partikelfilter zu passieren, müssen die Abgase durch die porösen Wände hindurch strömen. Dabei lagern sich Rußpartikel aus dem Abgas innerhalb der und nachfolgend auf den porösen Strukturen ab. Die beim Betrieb des Verbrennungsmotors eingelagerten Rußpartikel führen allmählich zu einer Verstopfung der porösen Struktur des Partikelfilters, die einen Anstieg des Abgasgegendrucks und damit einen Abfall der Motorleistung zu Folge hat. Um dies zu vermeiden, muss der Partikelfilter in regelmäßigen Abständen regeneriert werden.

Die Regeneration erfolgt bei hohen Abgastemperaturen durch Oxidation des Rußes mit dem im Abgas enthaltenen Sauerstoff zu gasförmigem Kohlendioxid und Kohlenmonoxid, das mit dem übrigen Abgas aus dem Partikelfilter ausgetragen wird. Die für eine Regeneration erforderlichen Abgastemperaturen werden im normalen Fahrbetrieb des Verbrennungsmotors nicht ohne Weiteres oder nur selten erreicht. Für eine ausreichende Regeneration von Partikelfiltern werden aktive Maßnahmen wie Abgastemperaturerhöhungen durch motorische oder nachmotorische Maßnahmen oder passive Maßnahmen in Form einer Verwendung von katalytisch wirkenden Hilfsstoffen zur Unterstützung ausgelöst. Die katalytisch wirkenden Hilfsstoffe senken die Abbrandtemperatur, bei der die genannte Reaktion von Ruß mit Sauerstoff zu Kohlendioxid und Kohlenmonoxid einsetzt. Sie können in Form einer katalytisch wirkenden Beschichtung der porösen Struktur oder durch Beimischung zum Dieselkraftstoff ihre Wirkung entfalten. Unter diesen beiden Alternativen hat sich die Beimischung zum Dieselkraftstoff mit Blick auf einen beschleunigten Rußabbrand als wirkungsvollste Lösung herausgestellt. Die Additive werden zusammen mit dem Ruß im Partikelfilter eingelagert und können dort die genannte Abbrandreaktion katalytisch unterstützen. Nachteilig ist jedoch, dass es im Partikelfilter zur Akkumulation von Additivrückständen kommt. Dies kann die Lebensdauer des Partikelfilters verringern.

Bei dem eingangs genannten Stand der Technik wird das Additiv zu dem Kraftstoff in einem als Referenz volumen zur genauen Additivdosierung dienen den Gemischtank gemischt. Dabei wird beim Auffüllen des Gemischtanks mit Kraftstoff eine entsprechende Menge Additiv über ein entsprechendes Dosiersystem beigemischt, so dass sich ein definiertes, gefordertes Konzentrationsverhältnis von Additiv zu Kraftstoff ergibt. Durch diese Beimischung zum Gesamtkraftstoffinhalt ergibt sich beim anschließenden Betrieb des Verbrennungsmotors eine unveränderliche Durchschnittskonzentration des Additivs. Dabei muss das Mischungsverhältnis von Additiv und Kraftstoff so bemessen sein, dass ein minimal erforderliches Massenverhältnis zwischen dem Additiv und dem Ruß im Abgas eingehalten wird.

Diese Forderung ergibt sich daraus, dass unterhalb eines minimal erforderlichen Massenverhältnisses keine zufriedenstellende Regeneration stattfindet. Da die Rußemission eines Verbrennungsmotors in Abhängigkeit von dessen Betriebszuständen schwanke, ergibt sich im Durchschnitt entweder ein Überschuss an Additiv oder ein Mangel an Additiv. Um eine Verstopfung des Partikelfilters auf jeden Fall zu verhindern, muss die Additivkonzentration im Kraftstoff in Betriebspunkten des Verbrennungsmotors mit hohen Ruß-Rohemissionen noch ausreichend sein. Dadurch ist die Additivkonzentration in Betriebspunkten mit geringeren Ruß-Rohemissionen daher größer als notwendig. Daraus ergeben sich unnötig große Additivrückstände im Partikelfilter, die die Lebensdauer des Partikelfilters herabsetzen.

Vor diesem Hintergrund besteht die Aufgabe der Erfindung in der Angabe eines Kraftstoffversorgungssystems und eines Verfahrens zur Zufuhr eines mit einem Kraftstoffadditiv versehenen Kraftstoffes zum Verbrennungsmotor, die eine verbesserte Anpassung der zugeführten Additivmenge an den tatsächlichen Bedarf des Verbrennungsmotors mit einem minimalen Additiveinsatz ermöglichen. Dies gilt nicht nur für das genannte Beispiel einer Dosierung von Additiven zur Partikelfilterregeneration, sondern für jede Dosierung zum Kraftstoffversorgungssystem.

Diese Aufgabe wird bei einem Kraftstoffversorgungssystem der eingangs genannten Art durch die kennzeichnenden Merkmale des Anspruchs 1 und bei einem Verfahren der eingangs genannten Art durch die kennzeichnenden Merkmale des Anspruchs 4 gelöst.

### Vorteile der Erfindung

Durch diese Merkmale wird die Aufgabe der Erfindung vollkommen gelöst.

Durch diese Merkmale stellt der erste Tank gewissermaßen eine Mischkammer dar, in der das Verhältnis von Additivmenge zu Kraftstoffmenge eingestellt werden kann. Daraus ergeben sich weitere Freiheitsgrade bei der Dosierung des Additivs zu dem letztlich an das Kraftstoffzumesssystem gelieferten Kraftstoff, aus deren Umsetzung sich weitere Vorteile ergeben. Beispiele solcher Vorteile können der folgenden, nicht abschließenden Aufzählung entnommen werden: Der Additivverbrauch wird reduziert. Damit reduzieren sich auch die Additivkosten. Bei aschebildenden Additiven verringert sich die Aschebildung. Dies gilt insbesondere für die Aschebildung in einem gegebenenfalls vorhandenen Partikelfilter. Als Folge ergibt sich eine Verlängerung der Lebensdauer und der Serviceintervalle eines solchen Partikelfilters.

Dadurch, dass nicht der gesamte Kraftstoffvorrat aus dem ersten Tank und dem zweiten Tank mit einer vorbestimmten Additivmenge vermischt wird, werden Entmischungen von Additiv und Kraftstoff, wie sie bei längeren Standzeiten auftreten können, vermieden oder zumindest verringert.

Dadurch, dass das Kraftstoffversorgungssystem ein Dosiermodul in einer Verbindung des Additivvorratsbehälters mit dem ersten Kraftstofftank aufweist, können während des Betriebs des Verbrennungsmotors verschiedene Additivanteile an der dem Kraftstoffzumesssystem gelieferten Kraftstoffmenge eingestellt werden. Dabei kann die Geschwindigkeit, mit der die Additivanteile veränderbar sind, über die Größe des ersten Tanks konstruktiv beeinflusst werden. Unterstellt man jeweils eine, bei Normierung auf eine Zeiteinheit, gleiche Entnahme von Kraftstoff aus dem ersten Tank, so wirken sich Veränderungen der Additivzufuhr und/oder der Nachlieferung von Kraftstoff aus dem zweiten Tank umso schneller aus, desto kleiner der erste Tank ist.

Das erste steuerbare Kraftstofffördermodul zwischen dem zweiten Kraftstofftank und dem ersten Kraftstofftank und das zweite steuerbare Kraftstofffördermodul im Kraftstoffvorlauf zwischen dem ersten Kraftstofftank und der Kraftstoffzumesseinrichtung ermöglicht eine Umsteuerung der Versorgung des Kraftstoffzumesssystems von einer Versorgung aus dem mit Additiv versetzten ersten Kraftstofftank, die ohne eine Nachlieferung von reinem Kraftstoff aus dem zweiten Kraftstofftank erfolgt, zu einer Versorgung mit Nachlieferung von Kraftstoff. Dadurch kann zwischen einer Kraftstoffzufuhr mit Additiven und ohne Additiv definiert umgesteuert werden. Außerdem kann bei deaktiviertem zweiten Kraftstofffördermodul Kraftstoff mit konstantem Additivanteil aus dem ersten Tank zugeführt werden.

Dadurch, dass die Zufuhr von Kraftstoffadditiv während des Betriebes des Verbrennungsmotors diskontinuierlich erfolgt, wird eine Verringerung der Additivzufuhr, beispielsweise ein Stopp der Additivzufuhr, in Betriebsphasen des Verbrennungsmotors oder des Abgasnachbehandlungssystems mit verringertem Bedarf ermöglicht. Außerdem werden zeitlich variierende Additivkonzentrationen im Abgas ermöglicht, was für die Reaktion des Additivs mit Schadstoffen im Abgas von Vorteil sein kann.

Eine weitere bevorzugte Ausgestaltung zeichnet sich durch einen Kraftstoffrücklauf zwischen der Kraftstoffzumesseinrichtung und dem ersten und dem zweiten Kraftstofftank aus.

Durch einen solchen Rücklauf kann die Menge des zum Kraftstoffzumesssystem geförderten Kraftstoffs über den Bedarf des Verbrennungsmotors hinaus gesteigert werden,
wobei die Überschussmenge über den Rücklauf zurückgeführt wird. Als Folge kann das Kraftstoffzumassystem gekühlt werden, was zu einer zuverlässigen, ohne Bildung von Dampfblasen erfolgenden Kraftstoffzufuhr zu Brennräumen des

Bevorzugt ist auch, dass das Kraftstoffversorgungssystem ein Umschaltventil in dem Kraftstoffrücklauf aufweist, wobei Kraftstoff über das Umschaltventil alternativ in den ersten oder den zweiten Kraftstofftank zurückgeführt wird.

Durch diese Ausgestaltung werden Einflüsse des rückgeführten Kraftstoffs auf die Additivanteile im ersten Kraftstofftank und zweiten Kraftstofftank verhindert.

Bevorzugt ist auch, dass die Zufuhr von Kraftstoffadditiv bei einem Verbrennungsmotor mit Rußpartikelfilter so erfolgt, dass sich im Rußpartikelfilter Schichten mit Additivrückständen und Schichten ohne Additivrückstäide ausbilden.

Auf diese Weise werden im Wechsel Bereiche von Rußpartikeln mit Additiven und Bereiche mit Rußpartikeln ohne Additive oder mit weniger Additiven im Rußpartikelfilter erzeugt. Bei einer Regeneration des eingelagerten Rußes kann der ohne Additive oder mit weniger Additiven eingelagerte Ruß durch die Oxidationswärme des mit Additiven eingelagerten Rußes mit verbrannt werden. Dadurch werden der AdditivVerbrauch und die Additiv-Kosten reduziert. Außerdem ergibt sich eine verringerte Aschebildung im Filter, was zu einer verlängerten Serviceintervalldauer und/oder Lebensdauer des Partikelfilters führt.

Eine weitere bevorzugte Ausgestaltung zeichnet sich dadurch aus, dass ein erstes Kraftstofffördermodul zwischen dem zweiten Kraftstofftank und dem ersten Kraftstofftank in Phasen ohne Zufuhr von Additiv betrieben wird und ein zweites Kraftstofffördermodul im Kraftstoffvorlauf zwischen dem ersten Kraftstofftank und der Kraftstoffzumesseinrichtung in Phasen mit Additivzufuhr und in Phasen ohne Additivzufuhr betrieben wird.

Bevorzugt ist auch, dass ein Kraftstoffrücklauf von der Kraftstoffzumesseinrichtung über ein Umschaltventil in einer Phase ohne Additivzufuhr auf den zweiten Tank geschaltet wird und in einer Phase mit Additivzufuhr auf den ersten Tank geschaltet wird.

Durch diese Verfahrensmerkmale werden die weiter oben bei den entsprechenden Vorrichtungsmerkmalen bereits erwähnten Möglichkeiten realisiert.
Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen:
- Fig. 1: schematisch eine Gesamtdarstellung eines erfindungsgemäßen Kraftstoffversorgungssystems im Betrieb mit ohne Zufuhr eines Additivs;
- Fig. 2: das Kraftstoffversorgungssystem aus Fig. 1 im Betrieb mit einer Zufuhr eines Additivs;
- Fig. 3: ein Ausführungsbeispiel eines Verfahrens zum Umschalten des Kraftstoffversorgungssystems zwischen den Betriebsarten nach Fig. 1 und Fig. 2;
- Fig. 4: zeitliche Verläufe von Schaltzuständen von Ventilen aus dem Kraftstoffversorgungssystem nach den Fig. 1 bis 3; und
- Fig. 5: einen Verlauf einer Additivkonzentration in einem Partikelfilter, wie er sich bei einer Ausgestaltung der Erfindung einstellt.

### Beschreibung der Ausführungsbeispiele

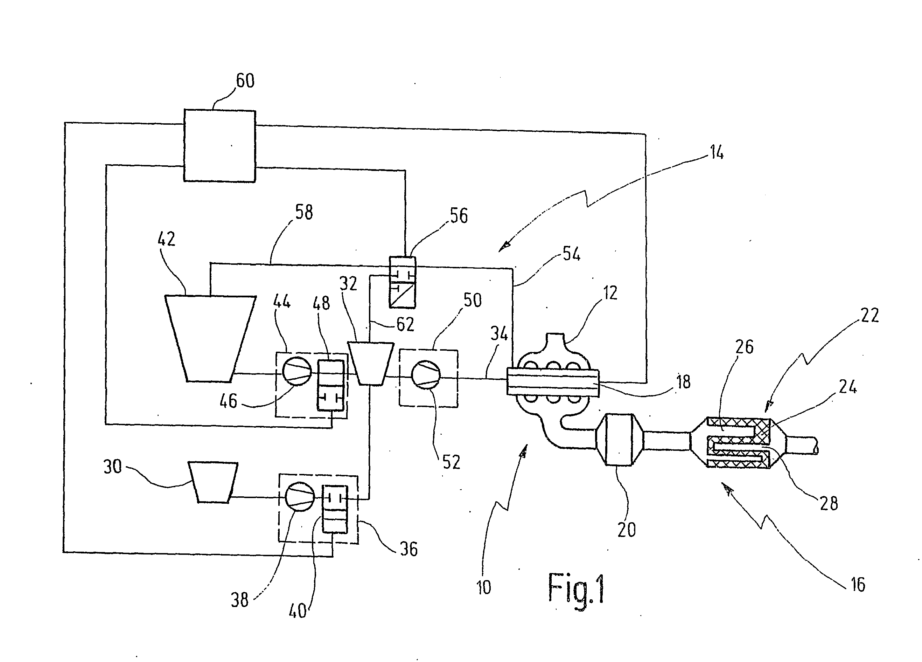

Die Figur 1 zeigt einen Verbrennungsmotor 10 mit einer Luftzuführung 12, einem Kraftstoffversorgungssystem 14 und einem Abgasnachbehandlungssystem 16. Über eine Kraftstoffzumesseinrichtung 18 wird der über die Luftzuführung 12 angesaugten Luft Kraftstoff zugemessen und das resultierende Kraftstoff/Luft-Gemisch wird in Brennräumen des Verbrennungsmotors 10 verbrannt. Die daraus resultierenden Abgase durchströmen in dem Abgasnachbehandlungssystem 16 zunächst einen Oxidationskatalysator 20 und anschließend einen Partikelfilter 22. Der Oxidationskatalysator 20 dient insbesondere zur Konvertierung von Kohlenwasserstoffen und Kohlenmonoxid nach einem Kaltstart des Verbrennungsmotors 10, bei dem es sich bevorzugt um einen Dieselmotor handelt.

In dem Abgas des Verbrennungsmotors 10 enthaltene Partikel, insbesondere Rußpartikel, werden in dem Partikelfilter 22 (vorübergehend) abgelagert. Der Partikelfilter 22 besitzt eine poröse Struktur 24, in der wechselseitig verschlossene Kanäle 26 und 28 ausgebildet sind. Es versteht sich, dass die Kanäle 26 und 28 hier nur stellvertretend für eine größere Vielzahl von Kanälen dargestellt sind. Um den eingelagerten Ruß von Zeit zu Zeit zu entfernen, wird der Kraftstoffzumesseinrichtung 18 aus dem Kraftstoffversorgungssystem 14 Kraftstoff zugemessen, der mit einem Additiv versetzt ist. Das Additiv bewirkt eine Herabsetzung der Temperatur, bei der im Partikelfilter 22 eingelagerter Ruß mit Sauerstoffüberschuss im Abgas zu Kohlendioxid verbrannt wird.

Das Kraftstoffversorgungssystem 14 weist zu diesem Zweck einen Additivvorratsbehälter 30 auf, aus dem heraus Additiv in einen ersten Tank 32 strömen kann. Der erste Tank 32 ist über einen Kraftstoffvorlauf 34 mit der Kraftstoffzumesseinrichtung 18 hydraulisch verbunden. Über ein Dosiermodul 36, das zwischen dem Additivvorratsbehälter 30 und dem Tank 32 angeordnet ist, wird die gewünschte Menge Additiv zu dem Kraftstoff im ersten Tank 32 hinzugemischt. Das Dosiermodul 36 enthält zu diesem Zweck beispielsweise eine Additivförderpumpe 38 und ein Zweiwegeventil 40, das in der Figur 1 in eine Sperrstellung geschaltet ist.

Erfindungsgemäß weist das Kraftstoffversorgungssystem 14 einen zweiten Tank 42 auf, der mit dem Kraftstoffvorrat für den Verbrennungsmotor 12 befüllt wird. Der zweite Kraftstofftank 42 ist über ein erstes Kraftstofffördermodul 44 mit dem ersten Kraftstofftank 32 hydraulisch verbunden. Das erste Kraftstofffördermodul 44 weist beispielsweise eine erste Kraftstoffpumpe 46 und ein 2-Wege-Ventil 48 auf, das zwischen einer Durchflussstellung und einer Sperrstellung umschaltbar ist. In der Figur 1 ist das Ventil 48 in der Durchflussstellung dargestellt. Entsprechend fördert die erste Kraftstoffpumpe 46 Kraftstoff aus dem zweiten Tank 42 in den ersten Tank 32. Da der Kraftstoff im ersten Tank 42 keine Additive enthält, und das 2-Wege-Ventil 40 des Additiv-Dosiermoduls 36 in seine Sperrstellung geschaltet ist, wird der erste Kraftstofftank 32 mit reinem Kraftstoff gefüllt, der über ein zweites Kraftstofffördermodul 50 mit einer zweiten Kraftstoffpumpe 52 zum Kraftstoffzumesssystem 18 geliefert wird.

Mit anderen Worten: In der gezeigten Stellung der Ventile 40 und 48 wird der Verbrennungsmotor 10 mit Kraftstoff ohne Additivzusatz betrieben. Bevorzugt weist das Kraftstoffversorgungssystem 14 noch einen Rücklauf 54 auf, über den überschüssiger Kraftstoff, der von der Kraftstoffzumesseinrichtung 18 nicht an den Verbrennungsmotor 10 dosiert wird, zu dem ersten Tank 32 oder dem zweiten Tank 42 zurückgeführt werden kann. Zur Umschaltung des Rücklaufs 54 auf den ersten Tank 32 oder den zweiten Tank 42 ist ein 3-Wege-Ventil 56 vorgesehen. In der Schaltstellung des 3-Wege-Ventils 56, die in der Figur 1 dargestellt ist, erfolgt die Rückführung von Kraftstoff über die erste Rücklaufverlängerung 58 in den zweiten Kraftstofftank 42. Durch diese Maßnahme wird Wärme, die der geförderte Kraftstoff beim Durchfluss durch die Kraftstoffzumesseinrichtung 18 aufgenommen hat, im großen Kraftstoffvorrat des zweiten Kraftstofftanks 42 verteilt. Damit können lokale Überhitzungen und Dampfblasenbildungen im Bereich von motornahen Teilen des Kraftstoffversorgungssystems 14 wirksam verhindert werden. Die Schaltstellung der Ventile 40, 48 und 56 und gegebenenfalls die Förderleistung der Additivpumpen 38 und der Kraftstoffpumpen 46 und 52 wird bevorzugt von einem Steuergerät 60 gesteuert, das auch die übrigen Funktionen des Verbrennungsmotors 10, wie etwa die Kraftstoffzumessung, steuert. Gegebenenfalls erforderliche Steuerleitungen zwischen Steuergerät 60 und den Pumpen 38, 46 und/oder 52 sind aus Gründen der Übersichtlichkeit nicht dargestellt.

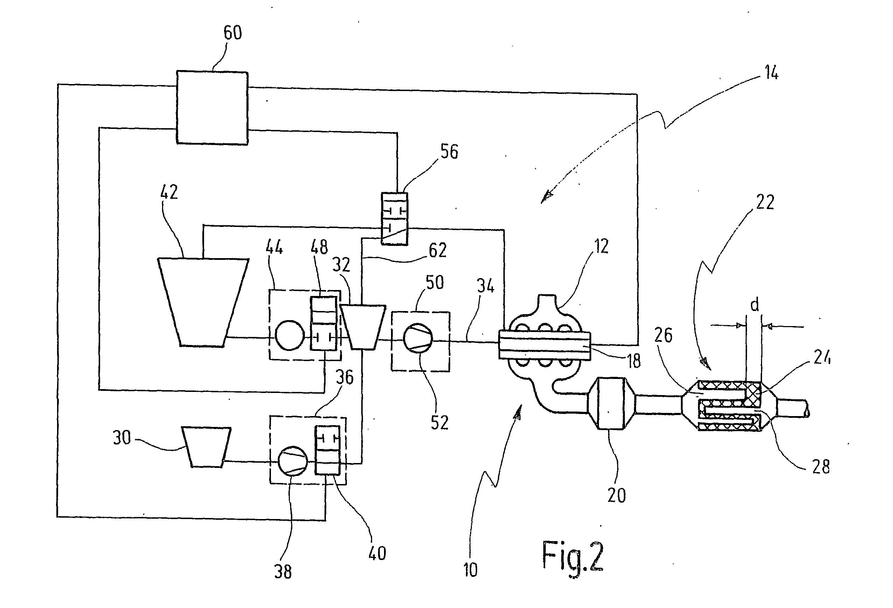

In der Figur 2 ist das Gesamtsystem aus der Figur 1 mit einer geänderten Schaltstellung der Ventile 40, 48 und 56 dargestellt. Das Additivdosierventil 40 ist in der Figur 2 in eine Durchflussstellung geschaltet. Als Folge wird Additiv aus dem Additivvorratsbehälter 30 durch die Additivförderpumpe 38 in den ersten Kraftstofftank 32 gefördert. Weil parallel das 2-Wege-Ventil 48 in eine Sperrstellung geschaltet wurde, erfolgt keine Nachlieferung von reinem Kraftstoff aus dem zweiten Kraftstofftank 42 in den ersten Kraftstofftank 32. Bei vorgegebener Anfangskraftstoffmenge im ersten Kraftstofftank 32 kann entsprechend über das Dosiermodul 36 eine gewünschte Additivkonzentration im ersten Kraftstofftank 32 eingestellt werden. Der Kraftstoff mit dieser Additivkonzentration wird über das zweite Kraftstofffördermodul 50 mit der zweiten Kraftstoffpumpe 52 über den Kraftstoffvorlauf 34 und die Kraftstoffzumesseinrichtung 18 an den Verbrennungsmotor 10 geliefert.

Der Verbrennungsmotor 10 arbeitet in diesem Fall mit Kraftstoff, dem Additiv beigemischt wurde. Das Additiv wird mit dem Abgas aus dem Verbrennungsprozess in das Abgassystem 16 geleitet und lagert sich zusammen mit Ruß aus der Verbrennung in dem Partikelfilter 22 ab. Durch die gemeinsame Ablagerung mit dem Ruß sinkt die Abbrandtemperatur so weit ab, dass der im Partikelfilter 22 eingelagerte Ruß bereits bei niedrigeren Temperaturen gewissermaßen gezündet werden kann und mit katalytischer Unterstützung abbrennt. Im Überschuss zur Kraftstoffzumesseinrichtung 18 gelieferter Kraftstoff wird wieder über den Rücklauf 54 zum 3-Wege-Ventil 56 geführt, das jetzt in eine andere Schaltstellung geschaltet ist. In der Schaltstellung des 3-Wege-Ventils 56 nach der Figur 2 wird der mit Additiven vermischte, über den Rücklauf 54 zurückgeführte Kraftstoff über eine zweite Rücklaufverlängerung 62 in den ersten Kraftstofftank 32 zurückgeführt. Auf diese Weise erfolgt keine Vermischung von Kraftstoff, der mit Additiven vermischt ist, mit Kraftstoff ohne Additive, wie er im zweiten Kraftstofftank 42 eingelagert ist. Daraus ergibt sich der Vorteil, dass bei nachfolgenden Neueinstellungen der Additivkonzentration im ersten Kraftstofftank 32 immer davon ausgegangen werden kann, dass die ursprüngliche Füllung des Kraftstofftanks 32, die aus dem zweiten Kraftstofftank 42 stammt, von Additiven frei ist.

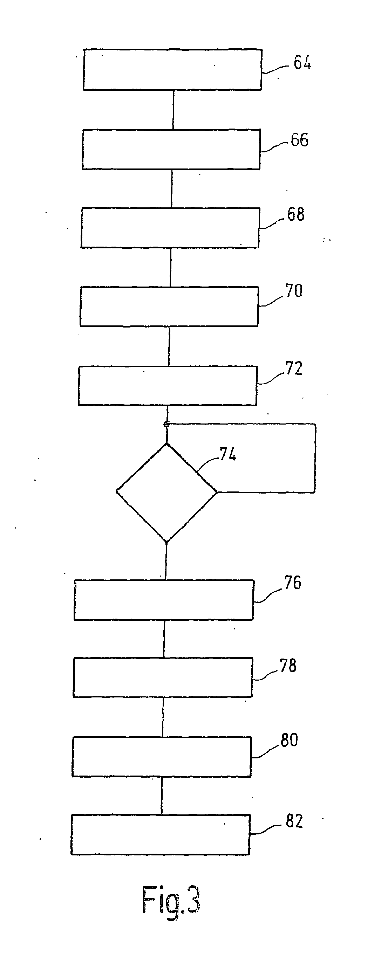

Im Folgenden wird unter Bezug auf Figur 3 ein Ausführungsbeispiel eines Verfahrens zum Umschalten des Kraftstoffversorgungssystems zwischen den Betriebsarten nach der Figur 1 und der Figur 2 dargestellt. Dabei repräsentiert der Schritt 64 zunächst den Ablauf eines Hauptprogramms zur Steuerung des Verbrennungsmotors 12, wie es im Steuergerät 60 abgearbeitet wird. Aus diesem Hauptprogramm heraus wird bei Bedarf ein Schritt 66 erreicht, der eine Anforderung einer Additiv-Zufuhr repräsentiert. Eine solche Anforderung kann im Steuergerät 60 gebildet werden, da im Steuergerät 60 sämtliche Betriebsdaten des Verbrennungsmotors 10 vorliegen, aus denen, beispielsweise durch ein Rechenmodell, der Beladungszustand des Partikelfilters 22 mit Ruß modelliert werden kann. Wird ein Schwellenwert für die Beladung mit Ruß erreicht, erzeugt das Motorsteuerungsprogramm die Anforderung im Schritt 66. Im Anschluss an den Schritt 66 wird ein Schritt 68 erreicht, in dem das 2-Wege-Ventil 48 von einer Durchflussstellung in eine Sperrstellung geschaltet wird. Zeitlich parallel wird das 3-Wege-Ventil 56 so geschaltet, dass der Durchfluss vom Rücklauf 54 zur ersten Rücklaufverlängerung 58 gesperrt wird und ein Durchfluss vom Rücklauf 54 zur zweiten Rücklaufverlängerung 62 freigegeben wird.

Anschließend wird das 2-Wege-Ventil 40 des Additiv-Dosiermoduls 36 geöffnet und über die Additivförderpumpe 38 wird Additiv aus dem Additivvorratstank 30 in den ersten Kraftstofftank 32 gefördert, bis dort die gewünschte Additivkonzentration erreicht ist. Dazu wird im Schritt 74 geprüft, ob die Konzentration des Additivs im Tank 32 größer als ein repräsentativer Schwellenwert ist. Solange dies nicht der Fall ist, wird die Abfrage 74 bei geöffnetem Dosierventil 40 wiederholt durchlaufen. Erreicht die Konzentration dagegen den Schwellenwert, wird aus dem Schritt 74 in einen Schritt 76 verzweigt, in dem das Additivdosierventil 40 geschlossen wird.

In der Folge wird der Verbrennungsmotor 10 mit der Kraftstoff/Additivmischung aus dem ersten Kraftstofftank 32 versorgt, ohne dass über das gesperrte 2-Wege-Ventil 48 reiner Kraftstoff aus dem zweiten Kraftstofftank nachgeliefert wird. Sobald die Regeneration des Partikelfilters 22 abgeschlossen ist oder sobald zumindest die gewünschte Menge an Additiv in den Partikelfilter 22 eingetragen worden ist, erzeugt das Motorsteuerprogramm im Steuergerät 60 in einem Schritt 78 eine Anforderung für den Normalbetrieb. Aus dieser Anforderung im Schritt 78 heraus wird ein Schritt 80 erreicht, in dem das 2-Wege-Ventil 48 wieder in eine Durchflussstellung geschaltet wird und die erste Kraftstoffpumpe 46 wieder reinen Kraftstoff an den ersten Kraftstofftank 32 liefert. In zeitlicher Nähe zu diesem Umschalten erfolgt in einem Schritt 82 das Umschalten des 3-Wege-Ventils 56 in eine Stellung, in der der Rücklauf 54 wieder mit der ersten Rücklaufverlängerung 58 verbunden ist.

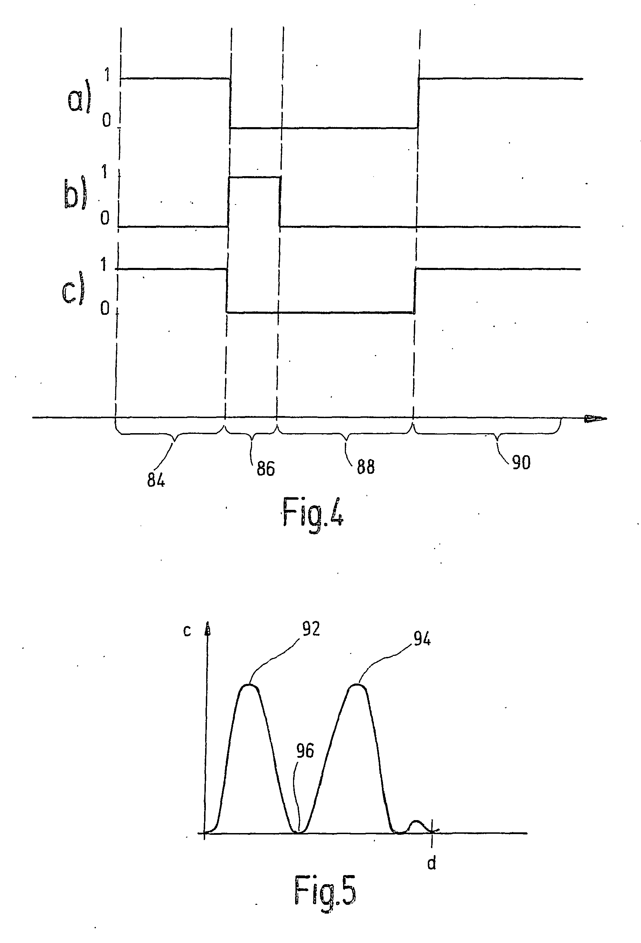

In der Figur 4 sind die beschriebenen zeitlichen Verläufe der Schaltstellungen der Ventile 40, 48 und 56 noch einmal über der Zeit dargestellt. Dabei bezieht sich Figur 4a auf das Ventil 48, Figur 4b auf das Ventil 40 und Figur 4c auf das Ventil 56. In einem ersten Zeitabschnitt 84 ist das Ventil 48 auf Durchfluss geschaltet, was in der Figur 1a durch den Pegel repräsentiert wird. Zeitlich parallel ist das Additivdosierventil 40 geschlossen, was in der Figur 4b durch den Pegel 0 repräsentiert wird. Außerdem ist das Ventil 56 auf die Rücklaufverlängerung 58 geschaltet, was in der Figur 4c durch den Pegel 1 dargestellt ist, der ein Ventil 56 in Durchflussstellung zum zweiten Kraftstofftank 42 repräsentiert. In einem zweiten Zeitabschnitt 86 wird das Dosierventil 40 bei geschlossenem Ventil 48 und umgeschaltetem 3-Wege-Ventil 56 geöffnet. Der niedrigere Pegel in Figur 4c repräsentiert ein Ventil 56, das einen Durchfluss zum ersten Kraftstofftank 32 freigibt. In einem dritten Zeitabschnitt 88 wird der Verbrennungsmotor 10 mit Kraftstoff aus dem Tank 32 versorgt, der mit Additiven versetzt ist. Entsprechend ist in diesem dritten Zeitabschnitt 88 das Ventil 48 weiter geschlossen, während das Ventil 56 auf den Rücklauf 62 geschaltet ist. Außerdem ist das Additivdosierventil 40 geschlossen. Der dritte Zeitabschnitt 88 entspricht damit einem Eintrag von Additiv in dem Partikelfilter 22. An den dritten Zeitabschnitt 88 schließt sich ein vierter Zeitabschnitt 90 an, der dem ersten Zeitabschnitt 84 entspricht und damit einer Rückkehr in den Normalbetrieb mit einer Zufuhr von reinem Kraftstoff zum Verbrennungsmotor 12 entspricht.

Wie bereits beschrieben, kann die Zufuhr von Additiv zum Partikelfilter 22 bei ausreichend heißem Partikelfilter 22 erfolgen; in diesem Fall löst die Einlagerung von Additiven in den Partikelfilter sofort eine Regeneration des Partikelfilters 22 aus. Alternativ dazu kann die Zufuhr von Additiv zum Partikelfilter 22 auch bei vergleichsweise kühlem Partikelfilter 22 erfolgen. In diesem Fall erfolgt die Zufuhr bevorzugt so, dass sich das in der Figur 5 qualitativ dargestellte Konzentrationsprcfil C(d) der Additivkonzentration d im eingelagerten Ruß über der Dicke d des Partikelfilters 22 einstellt. Dieser Verlauf der Konzentration zeichnet sich dadurch aus, dass wenigstens zwei Konzentrationsmaxima 92 und 94 ein Konzentrationsminimum 96 einschließen. Jedes Konzentrationsmaximum 92, 94 entspricht einer räumlichen Teilschicht der Dicke des Partikelfilters 22 mit hoher Additivkonzentration. Entsprechend repräsentiert das Minimum 96 eine Rußschicht mit geringer Additivkonzentration. Nach dem Erzeugen eines solchen Konzentrationsprofils durch geeignetes Wiederholen der Steuermuster nach der Figur 4 wird die Temperatur des Partikelfilters 22 durch eine aktive Heizmaßnahme gesteigert. Beim Überschreiten eines Temperaturschwellenwertes setzt dann die Oxidation der Additiv/Rußmischungen in den Schichten mit hoher Additivkonzentration ein. Dabei wird so viel Reaktionswärme frei, dass auch die Rußschichten in Bereichen mit niedriger Additivkonzentration mit freigebrannt werden können. Auf diese Weise kann der Partikelfilter 22 mit einem Minimum an Additiv-Einsatz regeneriert werden.

## Patentansprüche

1. Kraftstoffversorgungssystem (14) für einen Verbrennungsmotor (10), mit einem Additivvorratsbehälter (30) und einem ersten Tank (32), aus dem eine Kraftstoffzumesseinrichtung (18) des Verbrennungsmotors (10) über einen Kraftstoffvorlauf (34) mit Kraftstoff versorgt wird, wobei dem ersten Tank (32) Additiv aus dem Additivvorratsbehälter (30) zugeführt wird, mit einem zweiten Tank (42), aus dem der erste Tank (32) mit Kraftstoff versorgt wird, einem Dosiermodul (36) in einer Verbindung des Additivvorratsbehälters (30) mit dem ersten Kraftstofftank (32), und mit einem ersten Kraftstofffördermodul (44) zwischen dem zweiten Kraftstofftank (42) und dem ersten Kraftstofftank (32) und einem zweiten Kraftstofffördermodul (50) im Kraftstoffvorlauf (34) zwischen dem ersten Kraftstofftank (32) und der Kraftstoffzumesseinrichtung (18), **dadurch gekennzeichnet, dass** das Kraftstoffversorgungssystem (14) dazu eingerichtet ist, dem Verbrennungsmotor (10) das Kraftstoffadditiv während des Betriebs des Verbrennungsmotors (10) diskontinuierlich zuzuführen.

2. Kraftstoffversorgungssystem (14) nach Anspruch 1, **gekennzeichnet durch** einen Kraftstoffrücklauf (54) zwischen der Kraftstoffzumesseinrichtung (18) und dem ersten Kraftstofftank (32) und dem zweiten Kraftstofftank (42).

3. Kraftstoffversorgungssystem (14) nach Anspruch 4, **gekennzeichnet durch** ein Umschaltventil (56) in dem Kraftstoffrücklauf (54), über das Kraftstoff alternativ in den ersten Kraftstofftank (32) oder den zweiten Kraftstofftank (42) zurückgeführt wird.

4. Verfahren zur Zufuhr eines mit einem Kraftstoffadditiv versehenen Kraftstoffes zu einer Kraftstoffzumesseinrichtung (18) eines Verbrennungsmotors (10), wobei das Kraftstoffadditiv aus einem Additivvoxratsbehälter einem ersten Tank (32) zugegeben wird, aus dem die Kraftstoffzumesseinrichtung (18) versorgt wird und der mit Kraftstoff aus einem zweiten Tank (42) gespeist wird, **dadurch gekennzeichnet, dass** die Zufuhr von Kraftstoffadditiv zum Verbrennungsmotor (10) während des Betriebes des Verbrennungsmotors (10) diskontinuierlich erfolgt.

5. Verfahren nach Anspruch 4, **dadurch gekennzeichnet, dass** die Zufuhr von Kraftstoffadditiv bei einem Verbrennungsmotor (10) mit Rußpartikelfilter (22) so erfolgt, dass sich im Rußpartikelfilter (22) Schichten (92, 94) mit größeren Additivkonzentrationen und Schichten (96) mit kleineren Additivkonzentrationen ausbilden.

6. Verfahren nach einem der Ansprüche 4 oder 5, **dadurch gekennzeichnet, dass** ein erstes Kraftstofffördermodul (44) zwischen dem zweiten Kraftstofftank (42) und dem ersten Kraftstofftank (32) in Phasen (84, 90) ohne Zufuhr von Additiv betrieben wird und ein zweites Kraftstofffördermodul (50) im Kraftstoffvorlauf (34) zwischen dem ersten Kraftstofftank (32) und der Kraftstoffzumesseinrichtung (18) in Phasen (86, 88) mit Additivzufuhr und in Phasen (84, 90) ohne Additivzufuhr betrieben wird.

7. Verfahren nach einem der Ansprüche 4 bis 6, **dadurch gekennzeichnet, dass** ein Kraftstoffrücklauf (54) von der Kraftstoffzumesseinrichtung (18) über ein Umschaltventil (56) in einer Phase (84, 90) ohne Additivzufuhr auf den zweiten Tank (42) geschaltet wird und in einer Phase (86, 88) mit Additivzufuhr auf den ersten Tank (32) geschaltet wird.

## Claims

1. Fuel supply system (14) for an internal combustion engine (10), having an additive storage container (30) and having a first tank (32) from which a fuel metering device (18) of the internal combustion engine (10) is supplied with fuel via a fuel feed line (34), with additive from the additive storage container (30) being supplied to the first tank (32), having a second tank (42) from which the first tank (32) is supplied with fuel, having a dosing module (36) in a connection of the additive storage container (30) to the first fuel tank (32), and having a first fuel feed module (44) between the second fuel tank (42) and the first fuel tank (32) and having a second fuel feed module (50) in the fuel feed line (34) between the first fuel tank (32) and the fuel metering device (18), **characterized in that** the fuel supply system (14) is set up to supply the fuel additive to the internal combustion engine (10) discontinuously during the operation of the internal combustion engine (10).

2. Fuel supply system (14) according to Claim 1, **characterized by** a fuel return line (54) between the fuel metering device (18) and the first fuel tank (32) and the second fuel tank (42).

3. Fuel supply system (14) according to Claim 2, **characterized by** a switchover valve (56) in the fuel return line (54), by means of which switchover valve (56) fuel is returned alternatively into the first fuel tank (32) or into the second fuel tank (42).

4. Method for supplying a fuel, which is provided with a fuel additive, to a fuel metering device (18) of an internal combustion engine (10), with the fuel additive being added from an additive storage tank to a first tank (32) from which the fuel metering device (18) is supplied and which is fed with fuel from a second tank (42), **characterized in that** the supply of fuel additive to the internal combustion engine (10) takes place discontinuously during the operation of the internal combustion engine (10).

5. Method according to Claim 4, **characterized in that**, in the case of an internal combustion engine (10) with a soot particle filter (22), the supply of fuel additive takes place in such a way that layers (92, 94) with greater additive concentrations and layers (96) with lower additive concentrations are formed in the soot particle filter (22).

6. Method according to one of Claims 4 or 5, **characterized in that** a first fuel feed module (44) between the second fuel tank (42) and the first fuel tank (32) is operated in phases (84, 90) without a supply of additive and a second fuel feed module (50) in the fuel feed line (34) between the first fuel tank (32) and the fuel metering device (18) is operated in phases (86, 88) with a supply of additive and in phases (84, 90) without a supply of additive.

7. Method according to one of Claims 4 to 6, **characterized in that** a fuel return line (54) from the fuel metering device (18) is switched by means of a switchover valve (56) to the second tank (42) in a phase (84, 90) without a supply of additive and to the first tank (32) in a phase (86, 88) with a supply of additive.

## Revendications

1. Système d'alimentation en carburant (14) pour un moteur à combustion interne (10) comportant
un réservoir d'additif (30) et un premier réservoir (32) à partir duquel une installation de dosage de carburant (18) alimente le moteur à combustion interne (10) en carburant par une alimentation en carburant (34),
l'additif étant fourni au premier réservoir (32) à partir du réservoir d'additif (30),
un second réservoir (42) pour alimenter le premier réservoir (32) en carburant,
un module de dosage (36) dans la liaison entre le réservoir d'additif (30) et le premier réservoir à carburant (32) ainsi qu'un premier module de refoulement de carburant (44) entre le second réservoir de carburant (42) et le premier réservoir de carburant (32) ainsi qu'un second module de refoulement de carburant (50) dans l'alimentation en carburant (34) entre le premier réservoir de carburant (32) et l'installation de dosage de carburant (18),
**caractérisé en ce que**
le système d'alimentation en carburant (14) est conçu pour fournir au moteur à combustion interne (10) l'additif de carburant de façon discontinue pendant le fonctionnement du moteur à combustion interne (10).

2. Système d'alimentation en carburant (14) selon la revendication 1,
**caractérisé par**
un retour de carburant (54) entre l'installation de dosage de carburant (18) et le premier réservoir de carburant (32) et le second réservoir de carburant (42).

3. Système d'alimentation en carburant (14) selon la revendication 1,
**caractérisé par**
une soupape de commutation (56) dans le retour de carburant (54) reconduit le carburant alternativement vers le premier réservoir à carburant (32) ou le second réservoir à carburant (42).

4. Procédé d'alimentation en carburant additionné d'un additif dans une installation de dosage de carburant (18) d'un moteur à combustion interne (10) selon lequel on ajoute l'additif de carburant à partir d'un réservoir d'additif à un premier réservoir (32) à partir duquel on alimente l'installation de dosage en carburant (18) et on fournir le carburant à partir d'un second réservoir (42),
**caractérisé en ce que**
l'alimentation en additif de carburant du moteur à combustion interne (10) se fait de manière discontinue pendant le fonctionnement du moteur à combustion interne (10).

5. Procédé selon la revendication 4,
**caractérisé en ce que**
l'alimentation en additif de carburant dans le cas d'un moteur à combustion interne (10) équipé d'un filtre à particules (32) se fait de façon à développer dans le filtre à particules (22), des couches (92, 94) avec des concentrations plus importantes d'additif et des couches (96) avec des concentrations plus faibles d'additif.

6. Procédé selon l'une des revendications 4 ou 5,
**caractérisé par**
un premier module de refoulement de carburant (44) entre le second réservoir de carburant (42) et le premier réservoir de carburant (32) dans les phases (84, 90) sans alimentation en additif et un second module de refoulement de carburant (50) dans l'alimentation en carburant (34) entre le premier réservoir de carburant (32) et l'installation de dosage de carburant (18) dans les phases (86, 88) avec alimentation en additif et dans les phases (84, 90) sans alimentation en additif.

7. Procédé selon l'une des revendications 4 à 6,
**caractérisé par**
un retour de carburant (54) de l'installation de dosage de carburant (18) par l'intermédiaire d'une soupape de commutation (56) dans les phases (84, 90) sans alimentation en additif, vers le second réservoir (42) et dans la phase (86, 88) avec alimentation d'additif le retour se fait vers le premier réservoir (32).
